# EUROPEAN PATENT APPLICATION

(11) **EP 2 223 612 A1**
(43) Date of publication of application: **01.09.2010**
(21) Application number: 09380021.7
(22) Date of filing: 09.02.2009
(51) Int. Cl.: A23L 1/00, A23L 1/29, A21D 13/00

(54) **Alimentary product and method for the preparation thereof**

(71) Applicant: Sampere Vilet, Mercedes Rosario, 08008 Barcelona (ES)
(72) Inventor: Sampere Vilet, Mercedes Rosario, 08008 Barcelona (ES)
(74) Representative: Isern-Jara, Jaime

(57) **Abstract**

Is the production of a basic alimentary product, such as bread, by incorporating into its dough during the course of preparation thereof a series of oligolements, characterized by their particular properties in relation to different health disorders in humans, and incorporating other elements having characteristic properties onto a surface of a loaf of said basic product, such as raw tomato, olive oil and cured serrano-type ham.

It is destined for prevention, treatment and healing of the different types of health disorders occurring in humans.

## Description

### Object of the invention

The present invention relates to an alimentary product and a method for the preparation thereof.

### Field of the invention

Is the fabrication of the alimentary products for human basic alimentation, as well as of the products destined for prevention, treatment and healing of the different types of health disorders in humans.

### Background of the invention

It is well known the preparation of the basic foods for alimentary purposes of the people, such as, being the most important, bread, in many different varieties thereof.

Craft or industrial fabrication of conventional bread from its basic components, such as flour, with or without bran, yeast and diverse additives, has not experienced many changes throughout the centuries and until now, during the fabrication procedure it has only been sought a product ensuring fundamental needs of the human body.

Also traditionally, bread made essentially of carbohydrates has been consumed as an additive during consumption of other foods, such as the ones carrying proteins (meat, fish, ...), vitamins (vegetables, fruits and the like) and other alimentary components, with no other intension that to maintain a minimum acceptable level of health of the human body.

One typical case of utilization of bread is its use in raw or toasted state, in combination with different products, such as oil and sugar or salt, cut tomato or in a form of a sauce, and the like.

In these cases it is well known the consumption of bread spread with juice and partly with pulp of natural tomato and with addition of salt, and additionally with other products such as ham, cereals and/or different kinds of pulse. Such bread is known as "pa amb tomquet" (bread with tomato) of a Catalan origin and nowadays also widespread in other regions.

As it is known, modern tendencies in human alimentation are directed not only to deliver fundamental materials necessary to survive, but at the same time to provide the organism with the reserves necessary for health maintenance in its optimal level, such as: vitamins, minerals and other oligoelements used to prevent and correct different undesirable states (such as presence in blood of cholesterol, sugar and other components, undesired elevated blood pressure, tendency of the body to accumulate excessive fat and carbohydrates, etc.).

Generally, said administration of corrective products in the alimentation is carried out by their separate administration together with edible products, that is in the form of tablets, granules, syrups and other modes of consumption and alimentary supplements.

Is therefore desired to develop determined basic alimentary products, such as first of all bread, originally incorporating the above mentioned preventive or corrective ingredients.

### Brief description of the invention

The object of the invention is to incorporate in bread, being conventional or of other possible to prepare kind, manually or mechanically, tomato in any possible form, conferring nutritional and organoleptic properties of this vegetable to said first nutrient. What is more, the object of the invention is to incorporate in bread particular substances having specific properties and acting on specific functions of the human body, such as for example hibiscus, known for its reductive capacity of the blood pressure and cholesterol.

### Detailed description of the invention

According to the above, the known characteristics of bread will be used and intensified by the way of incorporating in this food product particular substances having alimentary, preventive, healing and flavouring properties, in order to achieve favourable mutual impact on the human body.

During the production process, to bread of some of the types as presently fabricated (common or white, wholemeal or brown, made of rye, made of linseed, made without yeast, tin bread or with addition of milk, with gluten, without gluten or for celiac patients, with bran, and the like) is added common salt (sodium chloride), such as marine salt or terrestrial salt, especially the last one in its variety called "crystal salt" or "natural crystalline", preferably being iodinated.

Once the bread has been prepared, either by traditional craft or modern industrial fabrication, with the addition of salt and other ingredients incorporated in a dough, it is being consumed in the form of loafs, having incorporated other products by the way of juxtaposition, actually characterizing the present invention.

Subsequently added to bread ingredients, which are consumed with it at the same time since they are incorporated, improve or correct the properties of this basic food as a result of their ingestion, are especially the following: tomato, oil, ham (preferably cured type) and the like.

### Characteristics of the incorporated ingredients

A) Tomato. It is an extremely nutritional, diuretic and refreshing vegetable, and what is more delicious when it is of good quality and ripe. Owing to its low energetic content (only 20 calories per 100 grams) it is widely used in slimming diets, whereas its low sodium content is beneficial against hypertension. Owing to its high content of alimentary fibre it is useful in enhancing intestinal movement, whereas owing to its water proportion (95%) is light and digestive. It delivers iron and copper which enhance red blood cells formation (anti-anaemic) and provide alkalisation (purification) of blood. What is more it contains the vitamins C, which generally strengthens the organism, A, B2 and B6 (and others), as well as it shows detoxification properties (toxins elimination) and anti-oxidation properties (cholesterol prevention), with the provision that it is being consumed in a raw state (i.e. alone as such, as a fruit or as part of a salad). It can also be consumed in a natural form, in a form of juice or being disintegrated, with or without addition of salt.

Tomato contains lycopene, an antioxidant which confers a characteristic red colour. It seems that lycopene reduces a tendency to suffer from divers types of cancer, such as prostate cancer (decelerates cells oxidation and therefore their undesired multiplication) and from cardiac and circulatory affections. The lycopene is liberated first of all during cooking of a tomato, therefore its desired effectiveness posses tomato sauces, also when consumed with other edible products, such as oil and cheese.

Apart of the lycopene, tomato contains other nutrients, such as minerals, glutathione (cellular antioxidant) and bioflavonoids (pigments that reinforce cell wall).

B) Olive oil. Natural olive fruit juice shall be "virgin", i.e. during its elaboration neither chemical products nor organic dissolvents shall be used. It is composed of fatty acids in 99% and natural antioxidants and vitamin E in 1%, and it has an acidity index (ratio of free fatty acids present in the analysed sample) which shall not exceed 2 g of oleic acid per 100 g of oil. "Extra virgin" variety is of the best quality, having acidity below 1 g per 100 g and best organoleptic characteristics (taste, smell, colour etc.). The other variety is simply called "olive oil" and it is composed of a blend of refined oils (refined with the use of chemical procedures and partially without the qualities of the virgin one) and virgin olive oil, having the acidity of no more than 1.5 g/100 g and in order to be acceptable, it shall never exceed 2 g/100 g.

Consumption of the virgin olive oil is associated with low mortality caused by heart attack and owing to its high content of oleic acid it regulates the cholesterol levels by raising "good" or HDL cholesterol and reducing "bad" or LDL cholesterol. Other beneficial effects of the virgin olive oil are the following: lesser incidence of arthritis, lower blood pressure, better functioning of the digestive system and other chest viscera and abdominal cavity, prevention of constipation, skin protection, calcium absorption and reduction of tissues damage owing to its antioxidant properties.

These and other beneficial properties of the virgin olive oil have been verified during strict clinical studies and tested on patients suffering from diverse illnesses, showing improvements in general physical state and in the treatment of diseases.

C) Salt. Beneficial properties of crystalline variety of salt called "rock salt" coming from some seams of the terrestrial salt mines have been mentioned above and it contains, together with sodium chloride, other elements essential for a good functional state of the human body organs. Salt regulates acid-base equilibrium of the organism, maintains osmotic pressure, preserves muscular elasticity and helps in cell permeability. It shall be ingested in discrete quantities in order to avoid suprarenal gland injuries, arterial hypertension and water retention in fatty tissues. Human organism requires no more than 0.2 g of salt daily, together with other minerals (oligoelements) such as iodine and fluorine of natural origin and in extremely low ratios.

Ham. Meat product obtained from back legs of a pig, cured (treated with salt and with drying) in the environments of determined humidity and temperature. With regard to nutritional effects it is preferable a cured type, called "serrano" and proceeding from white pig of diverse breeds. Its fat content is low and its energy value is of 160 kcal/100 g. It has high content of proteins (30%), lipids, carbohydrates and cholesterol, as well as vitamins and minerals.

Alimentary product according to the present invention essentially consists in a piece (such as a loaf) of bread incorporating in the dough all the elements as mentioned above, and where its outer surface, at least at one side, is subjected to application of discrete quantities of the above cited additives [tomato (in a form of sauce, pieces of pulp etc.), oil, salt, hibiscus, cured ham (in slices)] to be immediately consumed, preferably just after its preparation.

## Claims

1. Alimentary product and method for the preparation thereof, destined for prevention, treatment and healing of the different types of health disorders in humans, **characterized in that** it is carried out by incorporation into a dough of the basic alimentary product of some ingredients having particular properties to prevent, treat and heal the diverse human body deficiencies, and simultaneously by incorporating on the outer side of said dough of the alimentary product the other ingredients having other particular and complementary properties to the ones of the first ingredients.

2. Alimentary product and method for the preparation thereof according to claim 1, **characterized in that** the basic alimentary product having the dough incorporating the first ingredients is bread, in one of the diverse modes of fabrication thereof.

3. Method ..., according to claims 1 and 2,
**characterized in that** one of the ingredients being incorporated on the outer side of the basic alimentary product dough is tomato, in one of its diverse varieties.

4. Method ..., according to claims 1 to 2, **characterized in that** other of the ingredients being incorporated on the outer side of the basic alimentary product dough is olive oil, in one of its diverse varieties and modes of elaboration thereof.

5. Method ..., according to claims 1 and 2,
**characterized in that** other of the ingredients being incorporated on the outer side of the basic alimentary product dough is natural crystalline salt.

6. Method ..., according to claims 1 and 2,
**characterized in that** other of the ingredients being incorporated on the outer side of the basic alimentary product dough is ham, preferably cured serrano-type ham, and other alimentary products.

7. Method ..., according to claims 1 to 6, **characterized in that** the preparation of the alimentary product, such as bread, of particular properties having influence on human health, comprises the following steps:
a) producing the bread made of flour or any type of flour, especially white bakery flour of 000 or 0000 type, water and when necessary with bran, by incorporating into a dough the oligolements, such as crystalline salt and olive oil during the course of treatment and before its baking, and forming a dough to obtain basic shape capable of being divided into loafs for immediate consumption,
b) incorporating onto a surface of at least one side of the bread loafs the discrete quantities of other ingredients, such as raw tomato, olive oil and cured serrano-type ham.
